# EUROPÄISCHE PATENTSCHRIFT

(11) **EP 0 685 658 B1**
(45) Veröffentlichungstag und Bekanntmachung des Hinweises auf die Patenterteilung: **19.05.1999**
(21) Anmeldenummer: 95104463.5
(22) Anmeldetag: 27.03.1995
(51) Int. Cl.: F16B 37/04

(54) **Haltevorrichtung für eine Mutter**
Retaining device for a nut
Dispositif de retenue pour un écrou

(30) Priorität: 03.06.1994 DE 9409087 U
(43) Veröffentlichungstag der Anmeldung: 06.12.1995
(73) Patentinhaber: TEXTRON VERBINDUNGSTECHNIK GmbH & Co. OHG, 56567 Neuwied (DE); ADAM OPEL AG, 65423 Rüsselsheim (DE)
(72) Erfinder: Billmann, Peter, D-90455 Nürnberg (DE); Sobing, Dieter, 65428 Rüsselsheim (DE); Otte, Manfred, 65396 Walluf (DE); Ripper, Helmut, 63110 Rodgau (DE); Bax, Werner, 63512 Hainburg (DE); Köhler, Gerhard, 65474 Bischofsheim (DE)
(74) Vertreter: KOHLER SCHMID + PARTNER

(56) Entgegenhaltungen:
- EP-A- 0 444 979
- GB-A- 1 061 097
- US-A- 4 695 212

## Beschreibung

Die Erfindung betrifft eine Haltevorrichtung für eine Mutter, welche eine mit einem radialen Überstand versehene halsartige Aufnahme für eine Schraube aufweist, mit einer den radialen Überstand der halsartigen Aufnahme bügelartig übergreifenden und von der halsartigen Aufnahme an einer Durchtrittsöffnung durchsetzten Halterung für die Mutter sowie mit einem Haltekragen in Form eines von der halsartigen Aufnahme durchsetzten elastischen Ringes, welcher die Halterung an der dem radialen Überstand der halsartigen Aufnahme abgewandten Seite übergreift und an dem radialen Außenumfang der halsartigen Aufnahme lösbar klemmend gehalten ist.

Derartige Haltevorrichtungen werden bekanntermaßen für sogenannte Käfigmuttern verwendet. Bei einer Käfigmutter handelt es sich um einen Teil einer Schrauben-Mutter-Verbindung, über die zu montierende Bauteile an einem Widerlager festgelegt werden. Zur Montagevereinfachung wird die Käfigmutter mittels der Halterung im Bereich der für den Schraubenbolzen bestimmten Durchtrittsöffnung des Widerlagers an letzterem vormontiert. Die Halterung wird zu diesem Zweck fest mit dem Widerlager verbunden und übergreift in Einbaulage die in ihrem Innern lose angeordnete Mutter. Beim späteren Eindrehen des Schraubenbolzens in das Muttergewinde bietet die Halterung eine drehfeste Abstützung für den an der Mutter vorgesehenen radialen Überstand. Gleichzeitig verhindert die Halterung ein Ausweichen der Mutter in axialer Richtung des Schraubenbolzens. Dementsprechend läßt sich der Schraubenbolzen in die Mutter eindrehen, ohne daß diese von Hand bzw. unter Zuhilfenahme entsprechender Werkzeuge fixiert werden müßte.

Die EP-A-0 444 979 beschreibt eine Haltevorrichtung der eingangs genannten Art, im Falle derer die Mutter spielfrei an der Halterung gelagert ist.

Ausgehend von diesem Stand der Technik liegt der Erfindung die Aufgabe zugrunde, die vorbekannte Haltevorrichtung dahingehend weiterzubilden, daß ein Ausgleich von Montagetoleranzen sowie von beispielsweise durch Spannungen bzw. Dehnungen in dem montierten Bauteil verursachten radialen Lageänderungen des Schraubenbolzens - in seinem Ausmaß nach beeinflußbarer Art und Weise - möglich wird.

Diese Aufgabe wird erfindungsgemäß dadurch gelöst, daß die Halterung von der halsartigen Aufnahme der Mutter mit Spiel durchsetzt wird und sich der Haltekragen über eine die Durchtrittsöffnung der Halterung auskleidende Haltebuchse an der Halterung abstützt. Damit Montagetoleranzen ausgeglichen werden können und/oder damit der Schraubenbolzen auch nach der Montage beispielsweise unter der Wirkung von in dem montierten Bauteil auftretenden Spannungen bzw. Dehnungen seine Lage verändern kann, wird die Mutter mit Spiel in der Halterung gehalten. Dementsprechend verbleibt zwischen dem radialen Außenumfang der halsartigen Schraubenaufnahme der Mutter und der Wandung der der Schraubenaufnahme zugeordneten Durchtrittsöffnung an der Halterung ein Spalt. Durch die Wandstärke der Haltebuchse, welche die Durchtrittsöffnung der Halterung auskleidet, kann das Spiel der halsartigen Schraubenaufnahme in radialer Richtung beeinflußt werden. Darüber hinaus werden mittels der Haltebuchse Unebenheiten an den Rändern der Durchtrittsöffnung ausgeglichen. Derartige Unebenheiten sind darauf zurückzuführen, daß die Durchtrittsöffnung für die halsartige Schraubenaufnahme der Mutter in der Regel aus der betreffenden Fläche der Halterung ausgestanzt wird. Beispielsweise in Abhängigkeit von dem Werkstoff der Halterung ergeben sich dabei häufig unebene Stanzränder. Mittels der Haltebuchse läßt sich nun eine Durchtrittsöffnung mit der gewünschten Querschnittsform schaffen.

Zur vorläufigen Verbindung von Halterung und Mutter wird zunächst die Mutter mit ihrer halsartigen Aufnahme für die Schraube durch die hierfür vorgesehene Durchtrittsöffnung an der Halterung hindurchgesteckt. Anschließend kann der Haltekragen von der dem radialen Überstand der halsartigen Aufnahme gegenüberliegenden Seite auf die halsartige Aufnahme aufgeschoben werden. Dabei wird der Haltekragen an der halsartigen Aufnahme zweckmäßigerweise derart positioniert, daß zwischen dem radialen Überstand der halsartigen Aufnahme auf der einen Seite der Halterung und dem Haltekragen auf der gegenüberliegenden Seite der Halterung ein möglichst geringer Abstand in axialer Richtung der halsartigen Aufnahme verbleibt. Da bei dieser Anordnung der radiale Überstand der halsartigen Aufnahme einerseits und der Haltekragen andererseits die Halterung unmittelbar zu dieser benachbart übergreifen, kann die Mutter gegenüber der axialen Richtung der halsartigen Schraubenaufnahme eine lediglich minimale Kippbewegung ausführen. Infolgedessen wird eine Kipp-Ausweichbewegung der Mutter beim Eindrehen des Schraubenbolzens weitgehend verhindert. Gleichzeitig wird die Verschieblichkeit der Mutter innerhalb der Halterung in einer Ebene radial zu der halsartigen Aufnahme nicht beeinträchtigt. Infolge der bekannten klemmenden Fixierung des Haltekragens an der halsartigen Aufnahme kann durch Eindrehen des Schraubenbolzens in das Muttergewinde die Mutter in axialer Richtung der halsartigen Aufnahme an das Widerlager der Schrauben-Mutter-Verbindung angezogen werden. Darüber hinaus erlaubt es die Haltevorrichtung, Halterung und Mutter in bekannter Art und Weise bereits vor ihrer Anlieferung an den Montageort mit einfachen Handgriffen miteinander zu verbinden.

Der als Haltekragen vorgesehene elastische Ring läßt sich beispielsweise als Stanzteil und damit als Massenartikel mit geringem Fertigungsaufwand herstellen. Darüber hinaus umschließt der elastische Ring die halsartige Schraubenaufnahme, die gegenüber der Ringöffnung ein geringes Übermaß aufweist, eng anliegend. Gleichzeitig kann der elastische Ring so ausgebildet werden, daß er den zwischen der halsartigen Aufnahme der Mutter und der Durchtrittsöffnung der Halterung verbleibenden Spalt lückenlos überdeckt. In diesem Fall dichtet der auf die halsartige Schraubenaufnahme aufgeschobene elastische Ring den Ringspalt zwischen der halsartigen Aufnahme und der Halterung dicht ab. Die Verwendung einer derartigen Haltevorrichtung empfiehlt sich beispielsweise in Fällen, in denen nach Abschluß der Montagearbeiten der die Haltevorrichtung umgebende Bereich bzw. die Halterung der Haltevorrichtung selbst lackiert wird. Der als elastischer Ring ausgebildete Haltekragen wirkt dann als Sperre, mittels derer das Eindringen von Lack in das Innere der Halterung verhindert wird.

Eine bevorzugte Ausführungsform der erfindungsgemäßen Haltevorrichtung zeichnet sich dadurch aus, daß der Haltekragen und die Haltebuchse aus Kunststoff bestehen. Durch Verwendung der genannten Kunststoffteile wird ein Kontakt Metall auf Metall zwischen Mutter und Halterung vermieden. Als Werkstoffe für Haltekragen und Haltebuchse lassen sich Kunststoffe auswählen, die in ihren Materialeigenschaften auf die im Bereich der Montagestelle herrschenden Bedingungen abgestimmt sind. Für den Fall, daß der Bereich der Montagestelle im Anschluß an die Montage lackiert wird, stehen lackabweisende Kunststoffe zur Verfügung, bei deren Verwendung ein Verkleben des Haltekragens mit der die Durchtrittsöffnung der Halterung auskleidenden Haltebuchse ausgeschlossen ist. Als Kunststoffteile lassen sich Haltekragen und Haltebuchse einfach und billig nach dem Spritzgußverfahren herstellen.

Zur Sicherung des Haltekragens an der halsartigen Aufnahme ist an letzterer mit axialem Abstand von dem radialen Überstand ein radialer Vorsprung vorgesehen. Der radiale Vorsprung wirkt einem ungewollten Abgleiten des Haltekragens von der halsartigen Aufnahme entgegen.

Die Erfindung wird nachfolgend anhand schematischer Darstellungen von Ausführungsbeispielen näher erläutert. Es zeigen:
- Fig. 1a: eine Käfigmutter mit Kunststoff-Haltering in der Draufsicht,
- Fig. 1b: die Käfigmutter nach Fig. 1a in einer teilgeschnittenen Seitenansicht,
- Fig. 1c: die Käfigmutter nach den Fign. 1a und 1b in einer weiteren Seitenansicht,
- Fig. 2a: eine Käfigmutter mit einer Halterung mit Grundplatte und
- Fig. 2b: die Käfigmutter nach Fig. 2 a in einer teilgeschnittenen Seitenansicht.

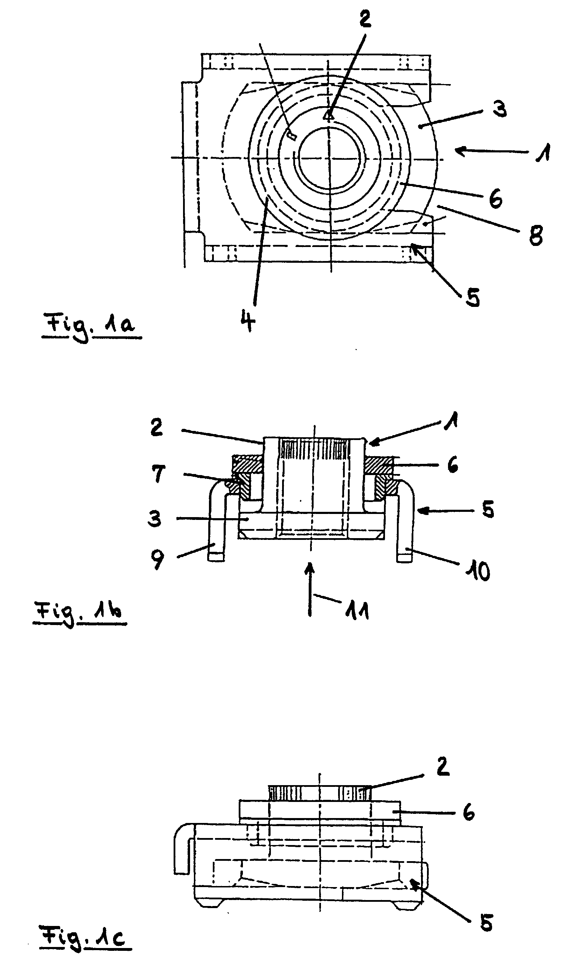

In den Fign. 1a bis 1c dargestellt ist eine als Käfigmutter 1 ausgebildete Mutter mit einer halsartigen Aufnahme 2 für einen nicht dargestellten Schraubenbolzen. An einem Ende wird die halsartige Aufnahme 2 von einem radialen Überstand in Form eines Flansches 3 überragt.

Die Käfigmutter 1 durchsetzt mit ihrer halsartigen Aufnahme 2 eine Ausstanzung 4 in einer im Querschnitt bügelartigen Halterung 5. An der dem Flansch 3 abgewandten Seite der Halterung 5 wird die halsartige Aufnahme 2 der Käfigmutter 1 von einem Haltekragen in Form eines Kunststoff-Halterings 6 umschlossen. Gegenüber der Durchtrittsöffnung des Kunststoff-Halterings 6 weist die halsartige Aufnahme 2 ein geringes Übermaß auf. Infolgedessen wird der Kunststoff-Haltering 6 elastisch klemmend an dem radialen Außenumfang der halsartigen Aufnahme 2 gehalten, und die Käfigmutter 1 kann sich über den Kunststoff-Haltering 6 in axialer Richtung der halsartigen Aufnahme 2 an der Halterung 5 abstützen. Als Auflager für den Kunststoff-Haltering 6 dient eine Kunststoff-Haltebuchse 7, die die Wandung der Ausstanzung 4 an der Halterung 5 auskleidet.

Zur vorläufigen Fixierung an der Halterung 5 wird die Käfigmutter 1 zunächst mit ihrer halsartigen Aufnahme 2 senkrecht zu deren axialer Richtung durch einen Einführungsschlitz 8 der Halterung 5 in deren Ausstanzung 4 eingeschoben. Anschließend wird die Kunststoff-Haltebuchse 7 konzentrisch mit der halsartigen Aufnahme 2 in die Ausstanzung 4 der Halterung 5 eingedrückt. Die Kunststoff-Haltebuchse 7 umgreift in Einbaulage die halsartige Aufnahme 2 mit radialem Spiel. Sie verhindert zum einen einen sich andernfalls beim Verschieben der metallenen Käfigmutter 1 in radialer Richtung der halsartigen Aufnahme 2 ergebenden Kontakt mit der ebenfalls aus Metall gefertigten Halterung 5 von Metall auf Metall. Gleichzeitig dient die Kunststoff-Haltebuchse 7 als Auskleidung für den in der Regel unebenen Stanzrand der Ausstanzung 4.

Nach dem Eindrücken der Kunststoff-Haltebuchse 7 in die Ausstanzung 4 der Halterung 5 wird abschließend der Kunststoff-Haltering 6 auf die halsartige Aufnahme 2 aufgeschoben. Nunmehr ist die Käfigmutter 1 sowohl in axialer als auch in radialer Richtung der halsartigen Aufnahme 2 mit Spiel an der Halterung 5 festgelegt. Die sich dadurch ergebende Baueinheit aus Käfigmutter 1 und Halterung 5 kann in dieser Form an den Montageort angeliefert werden. Der Formschluß zwischen der Käfigmutter 1 und der Halterung 5 sorgt dafür, daß sich beide Bauteile während des Transports nicht voneinander lösen.

Die in den Fign. 1a bis 1c dargestellte Baueinheit dient als Verbindungselement zum Fixieren von Kraftfahrzeugmotoren im Motorraum. An verstärkten, den Motorraum begrenzenden Karosserieteilen des betreffenden Fahrzeugs sind Langlöcher vorgesehen, durch die von der-Motorraumseite aus sich an entsprechenden Widerlagern des Motorblocks abstützende Schraubenbolzen von Befestigungsschrauben durchgesteckt werden. An der dem Motorraum abgewandten Seite des verstärkten Karosserieteils wird die aus der Käfigmutter 1 sowie der Halterung 5 bestehende Baueinheit angebracht. Zu diesem Zweck wird die Halterung 5 das Langloch des verstärkten Karosserieteils übergreifend an diesem angesetzt und an Schenkeln 9, 10 mit dem verstärkten Karosserieteil verschweißt. Anschließend wird von der Motorraumseite aus die betreffende Befestigungsschraube in Richtung eines Pfeils 11 in die halsartige Aufnahme 2 der Käfigmutter 1 eingedreht. Ist der Schraubenkopf der Befestigungsschraube auf ihren axialen Anschlag aufgelaufen, so führt eine Fortsetzung der Drehung des Schraubenbolzens dazu, daß die Käfigmutter 1 entgegen der Richtung des Pfeils 11 an das verstärkte Karosserieteil herangezogen und an diesem festgelegt wird. Die Innenflächen der Schenkel 9, 10 bieten beim Eindrehen des Schraubenbolzens ein drehfestes Widerlager für den Flansch 3 der Käfigmutter 1 und verhindern dadurch ein Mitdrehen der Käfigmutter 1 mit dem Schraubenbolzen. Montagespannungen am Motorblock und/oder sich beispielsweise infolge von Temperaturänderungen am Motorblock ergebende Dehnungen können durch das zwischen der Käfigmutter 1 und der die Käfigmutter 1 übergreifenden Halterung 5 bestehende Spiel ausgeglichen werden. Da sowohl der Kunststoff-Haltering 6 als auch die Kunststoff-Haltebuchse 7 aus lackabweisendem Kunststoff gefertigt sind, ist gewährleistet, daß beide Teile bei sich an die Montage des Motorblocks anschließenden Lackierarbeiten nicht miteinander verkleben. Dadurch daß der die halsartige Aufnahme 2 der Käfigmutter 1 umschließende Kunststoff-Haltering 6 den zwischen der radialen Außenwand der halsartigen Aufnahme 2 und der Kunststoff-Haltebuchse 7 verbleibenden Ringspalt abdichtet, wird ein Eindringen von Lack in den Innenraum der Halterung 5 verhindert.

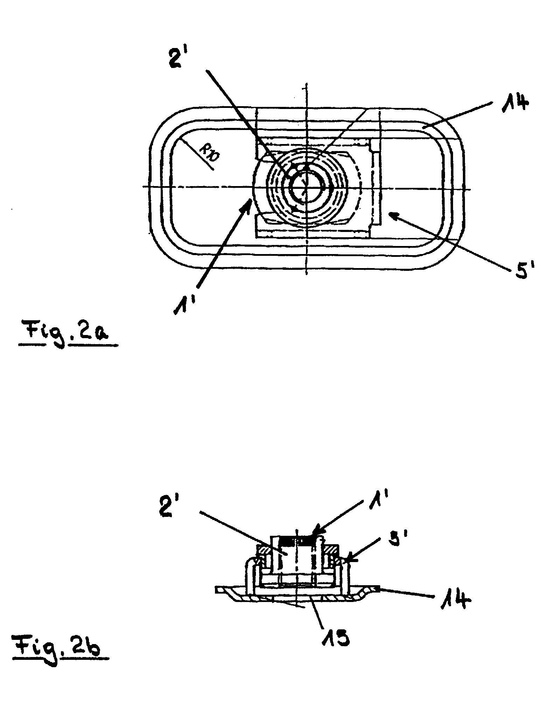

Den Fign. 2a und 2b ist ein Käfigmutter 1' zu entnehmen, die über eine halsartige Aufnahme 2' an einer Halterung 5' vorläufig festgelegt ist. Die Halterung 5' ist mit einer Grundplatte 14 verschweißt, die eine mit der Gewindebohrung der halsartigen Aufnahme 2' fluchtende Durchtrittsöffnung für den Schraubenbolzen aufweist. An der Grundplatte 14 wird die gesamte Baueinheit mit dem betreffenden Karosserieteil verschweißt. Im übrigen entsprechen die in den Fign. 2a und 2b dargestellten Bauteile den Bauteilen der Fign 1a bis 1c.

## Patentansprüche

1. Haltevorrichtung für eine Mutter (1, 1'), welche eine mit einem radialen Überstand (3) versehene halsartige Aufnahme (2, 2') für eine Schraube aufweist, mit einer den radialen Überstand (3) der halsartigen Aufnahme (2, 2') bügelartig übergreifenden und von der halsartigen Aufnahme (2, 2') an einer Durchtrittsöffnung durchsetzten Halterung (5, 5') für die Mutter (1, 1') sowie mit einem Haltekragen (6) in Form eines von der halsartigen Aufnahme (2, 2') durchsetzten elastischen Rings, welcher die Halterung (5, 5') an der dem radialen Überstand (3) der halsartigen Aufnahme (2, 2') abgewandten Seite übergreift und an dem radialen Außenumfang der halsartigen Aufnahme (2, 2') lösbar klemmend gehalten ist, dadurch gekennzeichnet, daß die Halterung (5, 5') von der halsartigen Aufnahme (2, 2') der Mutter (1, 1') mit Spiel durchsetzt wird und sich der Haltekragen (6) über eine die Durchtrittsöffnung der Halterung (5, 5') auskleidende Haltebuchse (7) an der Halterung (5, 5') abstützt.

2. Haltevorrichtung nach Anspruch 1, dadurch gekennzeichnet, daß der Haltekragen (6) und die Haltebuchse (7) aus Kunststoff bestehen.

3. Haltevorrichtung nach einem der vorhergehenden Ansprüche, dadurch gekennzeichnet, daß an der halsartigen Aufnahme (2, 2') mit axialem Abstand von dem radialen Überstand (3) ein radialer Vorsprung vorgesehen ist.

## Claims

1. A retaining device for a nut (1, 1') that has a neck-like receiving portion (2, 2'), provided with a radial projection (3), for a bolt, comprising a retaining element (5, 5') for the nut (1, 1'), which retaining element (5, 5') overlaps the radial projection (3) of the neck-like receiving portion (2, 2') in the manner of a bow-shaped element and through which the neck-like receiving portion (2, 2') passes at a passage opening, and comprising a retaining collar (6) in the form of a resilient ring through which the neck-like receiving portion (2, 2') passes and which overlaps the retaining element (5, 5') on the side remote from the radial projection (3) of the neck-like receiving portion (2, 2') and is held in a releasably clamping manner against the radial outer periphery of the neck-like receiving portion (2, 2'), characterised in that the neck-like receiving portion (2, 2') of the nut (1, 1') passes through the retaining element (5, 5') with clearance and the retaining collar (6) is supported on the retaining element (5, 5') by means of a retaining bush (7) which lines the passage opening in the retaining element (5, 5').

2. A retaining device according to claim 1, characterised in that the retaining collar (6) and the retaining bush (7) consist of plastics material.

3. A retaining device according to either of the preceding claims, characterised in that a radial overhang is provided on the neck-like receiving portion (2, 2'), axially spaced from the radial projection (3).

## Revendications

1. Dispositif de retenue pour un écrou (1, 1') qui présente un logement fileté (2, 2') en forme de col doté d'un porte-à-faux radial (3), le dispositif de retenue comportant un support (5, 5') pour l'écrou (1, 1'), lequel support est traversé par le logement (2, 2') en forme de col au droit d'une ouverture de passage et chevauche à la manière d'un étrier le porte-à-faux radial (3) du logement (2, 2') en forme de col, ainsi qu'un collet de retenue (6) qui présente la forme d'un anneau élastique traversé par le logement (2, 2') en forme de col, qui surmonte le support (5, 5') de son côté non tourné vers le porte-à-faux radial du logement (2, 2') en forme de col et est maintenu par serrage libérable sur la périphérie'radiale extérieure du logement (2, 2') en forme de col, caractérisé en ce que le support (5, 5') est traversé avec un jeu par le logement (2, 2') en forme de col pour l'écrou (1, 1') et en ce que le collet de retenue (6) s'appuie sur le support (5, 5') par l'intermédiaire d'une douille de retenue (7) habillant l'ouverture de passage du support (5, 5').

2. Dispositif de retenue selon la revendication 1, caractérisé en ce que le collet de retenue (6) et la douille de retenue (7) sont réalisés en matière plastique.

3. Dispositif de retenue selon l'une des revendications précédentes, caractérisé en ce qu'une saillie radiale est prévue sur le logement (2, 2') en forme de col, à distance axiale du porte-à-faux radial (3).
